(19) Europäisches Patentamt
European Patent Office
Office européen des brevets

(11) **EP 2 251 714 B1**

(12) **EUROPÄISCHE PATENTSCHRIFT**

(45) Veröffentlichungstag und Bekanntmachung des Hinweises auf die Patenterteilung:
**17.04.2013   Patentblatt 2013/16**

(51) Int Cl.:
***G01V 8/20*** *(2006.01)*

(21) Anmeldenummer: **10161766.0**

(22) Anmeldetag: **03.05.2010**

(54) **Optoelektronische Sensoranordnung**

Optoelectronic sensor assembly

Dispositif de capteur optoélectronique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **15.05.2009   DE 202009007018 U**

(43) Veröffentlichungstag der Anmeldung:
**17.11.2010   Patentblatt 2010/46**

(73) Patentinhaber: **Sick AG**
**79183 Waldkirch (DE)**

(72) Erfinder:
• **Henkel, Olaf**
**79276 Reute (DE)**

• **Natzkowski, Carsten**
**79108 Freiburg (DE)**
• **Pirkl, Klaus**
**60313 Frankfurt (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**DE-A1- 10 033 077      DE-A1- 10 227 710**
**DE-A1-102005 045 578      DE-A1-102005 056 000**

**Beschreibung**

Die Erfindung betrifft eine optoelektronische Sensoranordnung gemäß dem Oberbegriff des Anspruchs 1.

Bekannt sind optoelektronische Sensoranordnungen mit mehreren in einem Lichtsendeelement angeordneten Lichtsendern und mit mehreren in einem Lichtempfangselement angeordneten Lichtempfängern, wobei jeweils ein Lichtsender und ein zugehöriger Lichtempfänger ein Lichtsender-/Lichtempfängerpaar bilden, und mit einer Lichtsendersteuerung sowie einer Lichtempfängersteuerung, wobei das Lichtsendeelement und das Lichtempfangselement elektrisch voneinander entkoppelt sind und wobei die Lichtsender und die Lichtempfänger zur Abgabe und zum hierzu synchronen Empfang von Lichtimpulsen jeweils einzeln, zeitlich nacheinander, und zyklisch aktivierbar sind, und wobei die Lichtsendersteuerung für jeden Zyklus zum Aussenden einer vorgegebenen Zahl von Lichtimpulsen je Lichtsender ausgebildet ist.

Derartige Lichtgitter werden beispielsweise in automatisierten Fertigungssystemen verwendet, um einen Überwachungsbereich auf Eindringen von Objekten zu überwachen und in Abhängigkeit davon ein Schaltsignal auszugeben, welches dazu verwendet wird, eine Anlage oder eine Maschine bei Eintreten einer Sicherheitsanforderung in einen sicheren Zustand zu überführen. Diese Sicherheitssensoren ermitteln, wenn sich eine Person einer Anlage oder einer Maschine nähert und insbesondere einen kritischen Sicherheitsabstand unterschreitet, so dass in diesem Fall die Maschine oder Anlage angehalten oder zumindest mit verminderter Betriebsgeschwindigkeit betrieben wird. Diese Sicherheitssensoren sind als sichere Sensoren im Sinne von Maschinensicherheit ausgebildet, was bedeutet, dass sichere Sensoren oder die mit ihnen verbundenen Auswerte- und/oder Steuereinheiten den einschlägigen Normen EN 954 oder EN 61508, welche sich mit Maschinensicherheit befassen, genügen müssen, beispielsweise eine zweikanalige Struktur, Teststrukturen oder sich selbst überprüfende Strukturen aufweisen müssen oder auf sonstige Art und Weise in der Lage sein müssen, auch bei auftretenden Fehlern weiterhin zuverlässig zu funktionieren und die Fehler selbständig zu erkennen.

Sofern keine elektrische Verbindung zwischen dem Sendelement und dem Empfängerelement besteht, kann die Synchronisation auf optischem Wege erfolgen. Es ist bekannt, dass ein ausgewählter Lichtsender eine sogenannte Synchronisationssequenz an den ihm zugeordneten Empfänger sendet. Wird die Synchronisationssequenz empfangen, werden in einem definierten Rhythmus die weiteren Lichtsender-/Lichtempfängerpaare aktiviert und somit die eindeutige Zuordnung jedes einzelnen Lichtsenders auf seinen Lichtempfänger gewährleistet. Weil das Lichtsendeelement und das Lichtempfangselement auf Grund von Bauteiltoleranzen nur über einen begrenzten Zeitraum ausreichend synchron arbeiten, muss die Synchronisation regelmäßig wiederholt werden. Die DE 100 33 077 A1 schlägt dazu vor, zur Übertragung des Synchronisationssignals einen Lichtleiter vorzusehen. Bei einem derartigen Lichtgitter muss jedoch eine zusätzliche Verbindung zwischen dem Lichtsendeelement und dem Lichtempfangselement vorgesehen werden. Alternativ schlägt die DE 100 33 077 A1 vor, das Synchronisationssignal während des Betriebs über wechselnde Paare voneinander zugeordneten Lichtsendern und Lichtempfängern von der Sendeeinheit zur Lichtempfängereinheit zu übertragen.

Aus dem Dokument DE-A1-10 2005 045578 ist ein Verfahren zur Synchronisation mehrachsiger Lichtschranken bekannt, bei dem in mehreren Zyklen die Synchronisation zwischen Lichtsendern und Lichtempfängern durchlaufen wird und dabei die Synchronisationszeitpunkte in jedem Zyklus verändert werden, um auf diese Weise einen störlichtbedingten, zeitlich beschränkten Ausfall von Lichtwegen zu kompensieren.

In einigen Anwendungsbereichen von optoelektronischen Sensoranordnungen, insbesondere von Lichtgittern, ist es erforderlich, dass Objekte in den Überwachungsbereich einfahren oder dauerhaft Teile des Überwachungsbereichs abdecken. Dies ist beispielsweise bei horizontal angeordneten Lichtgittern der Fall, welche die Bewegung von Paletten überwachen. Befindet sich beim Einschalten des Lichtgitters eine Palette oder ein sonstiges Objekt im Bereich des Schutzfelds und deckt den oder die Synchronisationsstrahlen ab, kann sich das Lichtempfangselement nicht auf das Lichtsendeelement synchronisieren. Dadurch kann der Überwachungsbereich nicht ausgewertet werden und es erfolgt keine Freigabe. Das Förderband mit der Palette kann jedoch ohne Freigabe durch das Lichtgitter nicht anlaufen, um die Palette aus dem Überwachungsbereich zu bewegen. Diese Situation kann nur durch einen Bypass des Lichtgitters aufgehoben werden, was jedoch unerwünscht ist, da er den normalen Betriebsfluss einerseits stark einschränkt und andererseits die Sicherheitsfunktion eines Lichtgitters aufhebt.

Es ist somit wünschenswert, eine optoelektronische Sensoranordnung bereitzustellen, welche bei dauerhafter Abdeckung von Lichtsender-/Lichtempfängerpaaren eine Synchronisation ermöglicht.

Die Aufgabe der Erfindung besteht daher darin, eine optoelektronische Sensoranordnung bereitzustellen, welche bei einer beliebigen teilweisen oder dauerhaften Überdeckung eines Teils des Überwachungsbereichs synchronisiert werden kann.

Die Aufgabe der Erfindung wird gelöst durch eine optoelektronische Sensoranordnung mit den Merkmalen des Schutzanspruchs 1.

Vorteilhafte Ausgestaltungen und Weiterbildungen der Erfindung sind in den abhängigen Ansprüchen angegeben.

Die erfindungsgemäße optoelektronische Sensoranordnung mit mehreren in einem Lichtsendeelement angeordneten Lichtsendern und mit mehreren in einem Lichtempfangselement angeordneten Empfängern, wobei jeweils ein Lichtsender und ein zugehöriger Lichtempfänger ein Lichtsender-/Lichtempfängerpaar bilden, und mit einer Lichtsendersteuerung sowie einer Lichtempfängersteuerung, wobei das Lichtsendeelement und das Lichtempfangselement elektrisch voneinander entkoppelt sind und wobei die Lichtsender und die Lichtempfänger zur Abgabe und zum hierzu synchronen Empfang von Lichtimpulsen jeweils einzeln, zeitlich nacheinander und zyklisch aktivierbar sind, und wobei die Lichtsendersteuerung für jeden Zyklus zum Aussenden einer vorgegebenen Zahl von Lichtimpulsen je Lichtsender ausgebildet ist, zeichnet sich dadurch aus, dass die Lichtsendersteuerung ausgebildet ist, in wenigstens einem Zyklus wenigstens einen Lichtsender zum Aussenden wenigstens eines zusätzlichen Lichtimpulses zur optischen Übertragung von Informationen von dem Lichtsendeelement an das Lichtempfangselement zu aktivieren. Mit Hilfe der zusätzlichen Lichtimpulse ist es insbesondere möglich, die optoelektronische Sensoranordnung zu synchronisieren, selbst wenn lediglich noch ein einziger beliebiger Lichtstrahl zwischen einem Lichtsender-/Lichtempfängerpaar der optoelektronischen Sensoranordnung frei ist.

Gemäß der Erfindung wird der zusätzliche Lichtimpuls in verschiedenen Zyklen von verschiedenen Lichtsendern ausgesendet, um sicherzustellen, dass der zusätzliche Lichtimpuls nicht über einen längeren Zeitraum von gerade einem der Lichtsender ausgesendet wird, der dauerhaft oder zumindest für längere Zeit gedeckt ist.

Dies wird insbesondere auch dadurch erreicht, dass gemäß einer bevorzugten Ausführungsform der Erfindung in aufeinanderfolgenden Zyklen verschiedene Lichtsender zum Aussenden des wenigsten einen zusätzlichen Lichtimpulses aktivierbar sind.

Gemäß einer besonders bevorzugten Ausführungsform der Erfindung wird wenigstens ein zusätzlicher Lichtimpuls in der an einen Zyklus anschließenden Pause zwischen zwei Zyklen ausgesendet. Besonders bevorzugt wird hierfür bei jedem Zyklus ein anderer Lichtsender vorgesehen. Da bei einer optoelektronischen Sensoranordnung das Zeitverhalten der Lichtimpulse zueinander bekannt ist und weiterhin auch die Länge der Pause und die zeitliche Lage des zusätzlichen Lichtimpulses in der Pause bekannt ist, kann mithilfe des empfangenen Lichtimpulsmusters, auch wenn alle Lichtsender bis auf einen abgedeckt sind, eine optische Synchronisation zwischen dem Lichtsendeelement und dem Lichtempfangselement erfolgen. Insbesondere ist für diese Synchronisation keine Übertragung eines zusätzlichen Synchronisationssignals von Nöten.

Gemäß einer besonders bevorzugten Ausführungsform der Erfindung wird wenigstens ein zusätzlicher Lichtimpuls im Anschluss an die vorgegebene Zahl von Lichtimpulsen eines Lichtsenders oder auch diesen vorausgehend von diesem Lichtsender ausgesendet.

Vorzugsweise ist der wenigstens eine zusätzliche Lichtimpuls ein Synchronisationssignal.

Vorzugsweise ist der wenigstens eine zusätzliche Lichtimpuls eine kodierte Lichtimpulsfolge mit der Angabe der Nummer des jeweiligen Lichtsenders. Insbesondere eine Kombination derart, dass im Anschluss oder direkt vorausgehend an die vorgegebene Zahl von Lichtimpulsen eines Lichtsenders dieser Lichtsender sowohl eine Synchronisationssequenz als auch eine kodierte Lichtimpulsfolge mit der Angabe der Nummer des jeweiligen Lichtsenders aussendet, wird eine unerlaubte Synchronisation auf einen zweiten Lichtsender mit gleicher Kodierung und Strahlanzahl erschwert, da die Synchronisationssequenz und die erwartete Strahlnummer übereinstimmen müssen.

Vorteilhafterweise ist die Lichtsendersteuerung dazu ausgebildet, für jeden Zyklus genau einen Lichtimpuls je Lichtsender auszusenden.

Gemäß einer besonders bevorzugten Ausführungsform ist die optoelektronische Sensoranordnung als Sicherheitslichtgitter ausgebildet, da insbesondere bei Sicherheitslichtgittern auch bei ungünstigen Bedingungen, vorliegend insbesondere bei dauerhafter oder längerfristiger Abdeckung eines Teils der Lichtsender, eine Synchronisation und damit eine Funktionsweise der optoelektronischen Sensoranordnung gewährleistet sein muss.

Die Erfindung wird anhand der nachfolgenden Figuren ausführlich erläutert.

Es zeigt:

Figur 1 eine schematische Darstellung einer optoelektronischen Sensoranord- nung mit Objekten in einer ersten Position,

Figur 2 die optoelektronische Sensoranordnung gemäß Figur 1 mit Objekten in einer zweiten Position und

Figur 3 ein Pulsmuster der Lichtimpulse einer optoelektronischen Sensoran- ordnung gemäß Figur 1.

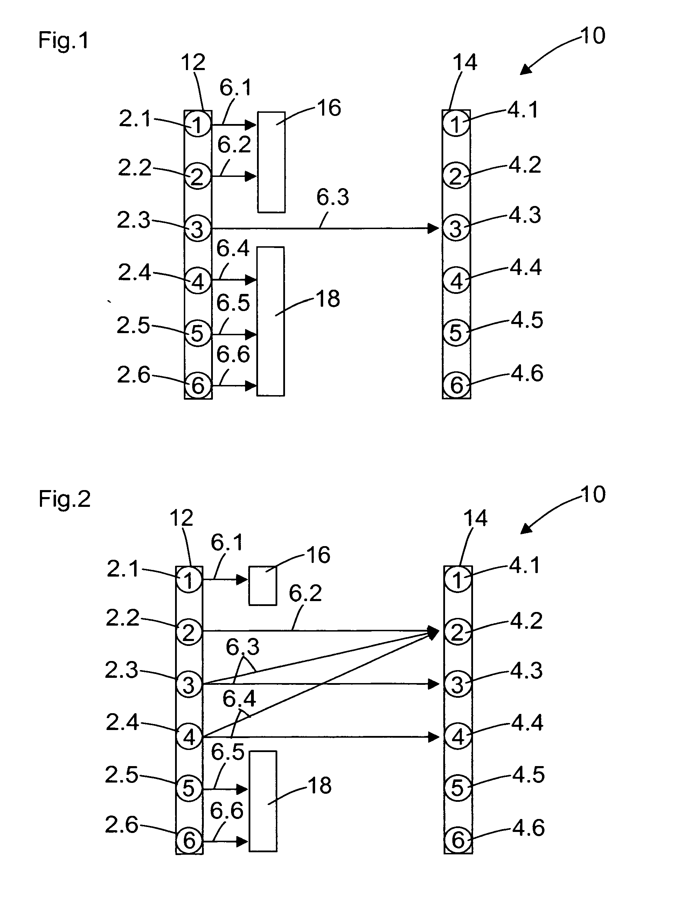

Die Figuren 1 und 2 zeigen eine optoelektronische Sensoranordnung 10 mit einem Lichtsendeelement 12, in welchem nebeneinander angeordnet sechs Lichtsender 2.1 - 2.6 angeordnet sind. Die optoelektronische Sensoranordnung 10 weist weiterhin ein Lichtempfangselement 14 auf, in welchem nebeneinander sechs Lichtempfänger 4.1 - 4.6 angeordnet sind. Das Lichtsendeelement 12 und das Lichtempfangselement 14 sind elektrisch voneinander entkoppelt.

Jeweils ein Lichtsender 2.1 - 2.6 und ein Lichtempfänger 4.1 - 4.6 bilden gemeinsam ein Lichtsender-/Lichtempfängerpaar 1 - 6. Die Lichtsender 2.1 - 2.6 senden Lichtstrahlen 6.1 - 6.6 aus, welche von den zugehörigen Lichtempfängern 4.1 - 4.6 detektiert werden können. Die Lichtwege der Lichtstrahlen 6.1 - 6.6 können jedoch durch Objekte 16, 18 teilweise oder auch dauerhaft unterbrochen sein. In Figur 1 ist eine Position der Objekte 16, 18 dargestellt, in welcher das Objekt 16 die Lichtstrahlen 6.1 und 6.2 abdeckt, während das Objekt 18 die Lichtstrahlen 6.4, 6.5 und 6.6 abdeckt, so dass lediglich der Lichtstrahl 6.3 frei ist und somit der Lichtweg zwischen dem Lichtsender 2.3 und dem Lichtempfänger 4.3 der einzige Lichtweg ist, der nicht blockiert ist.

In dem Lichtsendeelement 12 ist eine Lichtsendersteuerung und dem Lichtempfangselement 14 eine Lichtempfängersteuerung angeordnet, welche die Lichtsender 2.1 - 2.6 bzw. die Lichtempfänger 4.1 - 4.6 zur Abgabe und zum synchronen Empfang von Lichtimpulsen jeweils einzeln, zeitlich nacheinander und zyklisch aktivierbar sind. Beispielsweise kann für jeden Zyklus genau ein Lichtimpuls je Lichtsender 2.1 bis 2.6 vorgegeben sein, so dass als Pulssequenz die Folge 123456_123456_...

vorgesehen ist.

Die Zahlen 1 bis 6 beziehen sich dabei auf die Lichtsender-/ Lichtempfängerpaare 1 - 6, so dass nacheinander die Lichtsender 2.1 bis 2.6 und synchron dazu die Lichtempfänger 4.1 - 4.6 aktiviert werden, um die von den Lichtsendern 2.1 - 2.6 ausgesendeten Lichtstrahlen 6.1 - 6.6 detektieren zu können. Der Unterstrich deutet eine Pause mit einer anderen Länge als die Pause zwischen den einzelnen Lichtimpulsen der Lichtsender 2.1 - 2.6 an.

Da das Lichtsendeelement 12 und das Lichtempfangselement 14 elektrisch voneinander entkoppelt sind, ist es nötig, das Lichtsendeelement 12 auf das Lichtempfangselement 14 regelmäßig zu synchronisieren.

Erfindungsgemäß ist dazu in einem ersten Ausführungsbeispiel der Erfindung vorgesehen, in der Pause zwischen den Lichtimpulsen der sechs Lichtsender 2.1 - 2.6 jeweils zusätzlich einen einzigen der Lichtsender 2.1 - 2.6 zum Aussenden wenigstens eines zusätzlichen Lichtimpulses zu aktivieren. Dabei wird der zusätzliche Lichtimpuls zyklisch von den verschiedenen Lichtsendern 2.1 bis 2.6 ausgesendet. Insbesondere werden in aufeinander folgenden Pausen die Lichtsender 2.1 bis 2.6 zyklisch aktiviert, insbesondere werden in aufeinander folgenden Pausen verschiedene der Lichtsender 2.1 bis 2.6 aktiviert.

Die Pulssequenz kann bei der in Figur 1 dargestellten optoelektronischen Sensoranordnung beispielsweise folgendermaßen aussehen:

123456_1_123456_2_123456_3_123456_4_123456_5_123456_6_123456_1_123456_2_...

Anhand des Wissens, wie viele Strahlen 6.1 - 6.6 die optoelektronische Sensoranordnung 10 aufweist, wie lang die Pause zwischen den einzelnen Lichtimpulsen und insbesondere die zeitliche Lage des zusätzlichen Lichtimpulses innerhalb der Pause ist, kann eine Synchronisation zwischen dem Lichtsendeelement 12 und dem Lichtempfangselement 14 erfolgen.

Auch wenn einige der Lichtstrahlen 6.1 - 6.6, insbesondere alle bis auf einen wie beispielsweise in Figur 1 dargestellt, abgedeckt sind, ist anhand des Wissens über den zeitlichen Ablauf der Lichtimpulse und der Pausen eine Synchronisation möglich.

In Figur 1 sieht beispielsweise der Lichtempfänger 4.3 nur den Lichtstrahl 6.3. Das Empfangssignal des Lichtempfängers 6.3 sieht daher wie folgt aus:

xx3xxx_x_xx3xxx_x_xx3xxx_3_xx3xxx_x_xx3xxx_x_xx3xxx_x_...

Das x steht dabei für einen abgedeckten Strahl, in welchem kein Lichtsignal von dem Lichtempfänger 4.3 detektiert werden kann. Anhand der zeitlichen Abstände zwischen den detektierten Lichtimpulsen kann der Lichtempfänger 4.3 erkennen, von welchem Lichtsender, nämlich dem Lichtsender 2.3, Lichtimpulse gesendet werden und an welcher Position des Zyklus sich das Lichtsendeelement 12 gerade befindet, so dass eine Synchronisation zwischen dem Lichtsendeelement 12 und dem Lichtempfangselement 13 erfolgen kann.

Figur 2 zeigt die optoelektronische Sensoranordnung 10 gemäß Figur 1 mit den Objekten 16, 18 in einer zweiten Position, in welcher das Objekt 16 lediglich den Lichtstrahl 6.1 und das Objekt 18 lediglich die Lichtstrahlen 6.5 und 6.6 abdeckt.

In diesem Beispiel sieht der Lichtempfänger 4.2 die Lichtstrahlen 6.2, 6.3 und 6.4. Der Lichtempfänger 4.2 empfängt somit folgende Lichtimpulsfolge:

x234xx_x_x234xx_2_x234xx_3_x234xx_4_x234xx_x_x234xx_x_x234xx_x_x234xx _2_…

Auch in diesem Beispiel ist anhand der Pausenzeiten und dem Wissen über die Zahl der vorhandenen Lichtstrahlen 6.1 - 6.6 ein Synchronisieren des Lichtempfangselements 14 auf das Lichtsendeelement 12 möglich. Insbesondere ist eine Synchronisation dabei möglich, ohne dass eine spezielle Synchronisationssequenz von einem der Lichtsender 2-1 - 2-6 ausgesendet werden muss, es genügt lediglich, je Zyklus genau einen zusätzlichen Lichtimpuls an unterschiedlich wechselnden Positionen, d. h. von unterschiedlichen Lichtsendern 2.1 - 2.6 in einem vorgegebenen Zeitfenster, beispielsweise in der Pausenzeit zwischen dem Lichtimpuls des letzten Lichtsenders 2.6 und dem Lichtimpuls des nachfolgenden ersten Lichtsenders 2.1, aber auch beliebig zwischen den Lichtimpulsen der Lichtsender 2.1 - 2.6, auszusenden.

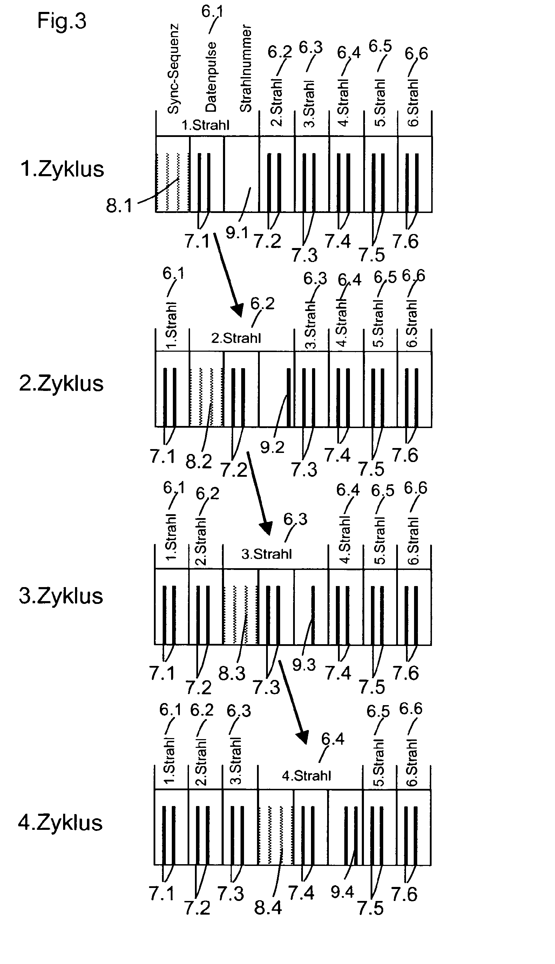

Figur 3 zeigt ein Pulsmuster der optoelektronischen Sensoranordnung gemäß Figur 1 gemäß einem zweiten Ausführungsbeispiel der Erfindung, bei welchem innerhalb eines Zyklus von jedem der Lichtsender 6.1 - 6.6 genau zwei Lichtimpulse 7.1 - 7.6 ausgesendet werden. In Figur 3 sind die ersten vier Zyklen dargestellt, wobei in jeder Zeile ein Zyklus dargestellt ist. Zusätzlich wird in jedem Zyklus genau einer der Lichtstrahlen 6.1 - 6.6 als Synchronisationsstrahl ausgewählt, wobei der zugehörige Lichtsender 6.1 - 6.6 zusätzlich zu den beiden Lichtimpulsen 7.1 - 7.6 vor den beiden Lichtimpulsen 7.1 - 7.6 eine Synchronisationssequenz 8.1 - 8.6 und im Anschluss an die Lichtimpulse 7.1 - 7.6 eine kodierte Lichtimpulsfolge 9.1 bis 9.6 mit der Angabe der Nummer des jeweiligen Lichtsenders 6.1 - 6.6 aussendet. Nach einem Zyklus, in welchem beispielsweise der Lichtsender 2.1 wie in der ersten Zeile von Figur 3 dargestellt den Synchronisationsstrahl aussendet, wird der nachfolgende Lichtsender 2.1 - 2.6, d. h. nach dem Lichtsender 2.1 der Lichtsender 2.2 wie in der zweiten Zeile von Figur 3 dargestellt, der neue Lichtsender für den Synchronisationsstrahl.

Zu den in einem Zyklus ausgesendeten Lichtimpulsen 7.1 - 7.6 wird somit als zusätzlicher Lichtimpuls einerseits ein Synchronisationssignal 8.1 - 8.6 und andererseits eine kodierte Lichtimpulsfolge 9.1 - 9.6 mit der Angabe der Nummer des jeweiligen Lichtsenders ausgesendet.

Zur Synchronisation beginnt nach dem Einschalten in der optoelektronischen Sensoranordnung 10 einer der Lichtempfänger 4.1 - 4.6 nach Lichtimpulsen zu suchen. Werden innerhalb einer Zykluszeit Lichtimpulse empfangen, wird nach der Synchronisationssequenz gesucht. Hat der ausgewählte Lichtempfänger 4.1 - 4.6 die Synchronisationssequenz 8.1 - 8.6 empfangen, kann auch die Information empfangen werden, von welchem Lichtstrahl 6.1 - 6.6 die Synchronisationssequenz 8.1 - 8.6 gesendet wurde. Mit dieser Information ist der Lichtempfänger 4.1 - 4.6 in der Lage, innerhalb der nachfolgenden Zyklen die Synchronisation abzuschließen. Sollte der ausgewählte Lichtempfänger 4.1 - 4.6 nach einem Zyklus keine Synchronisationssequenz 8.1 - 8.6 empfangen haben, weil sich ein Objekt 16, 18 im Lichtstrahl 6.1 - 6.6 befindet, wird ein anderer Lichtempfänger 4.1 - 4.6 aktiviert. Bevorzugt sollte die Synchronisation mit einem Lichtempfänger in der Mitte des Lichtsendeelements 14, beispielsweise mit dem Lichtempfänger 6.3 oder 6.4 starten, da dieser Lichtempfänger 6.3, 6.4 in der Regel die meisten Lichtsender 2.1 - 2.6 sieht.

Um die Möglichkeit der Detektion eines Synchronisationssequenzsignals 8.1 - 8.6 zu erhöhen, ist es möglich, innerhalb eines Zyklus mehrere der Lichtstrahlen 6.1 - 6.6 als Synchronisationsstrahl auszuwählen. Dies verlängert zwar die Ansprechzeit, erhöht jedoch insbesondere bei häufiger Anwesenheit von Objekten 16, 18 in dem Überwachungsbereich der optoelektronischen Sensoranordnung 10 die Möglichkeiten zur Synchronisation. Insbesondere kann hinterlegt werden, in welcher Reihenfolge nach Einschalten der optoelektronischen Sensoranordnung die entsprechenden Lichtempfänger 4.1 bis 4.6 aktiviert werden sollen, um eine Synchronisation vorzunehmen.

Für eine bessere Verfügbarkeit bei der Erkennung der Nummern der jeweiligen Lichtsender 2.1 - 2.6 können fehlerkorrigierte Lichtimpulscodes verwendet werden.

Die Übertragung von sowohl einer Synchronisationssequenz 8.1 - 8.6 als auch einer kodierten Lichtimpulsfolge 9.1 - 9.6 zur Identifikation der Nummer des jeweiligen Lichtsenders 2.1 - 2.6 zusätzlich zu dem Lichtimpuls 7.1 - 7.6 erschwert eine unerlaubte Synchronisation auf eine zweite optoelektronische Sensoranordnung mit gleicher Kodierung und Zahl von Lichtstrahlen 6.1 - 6.6, da die Synchronisationssequenz 8.1 - 8.6 und die erwartete Nummer des entsprechenden Lichtsenders 2.1 - 2.6 übereinstimmen müssen.

**Bezugszeichenliste**

| | |
|---|---|
| 10 | optoelektronische Sensoranordnung |
| 12 | Lichtsendeelement |
| 14 | Lichtempfangselement |

(fortgesetzt)

| | |
|---|---|
| 16 | Objekt |
| 18 | Objekt |
| | |
| 1 - 6 | Lichtsender-/Lichtempfängerpaar |
| 2.1 - 2.6 | Lichtsender |
| 4.1 - 4.6 | Lichtempfänger |
| 6.1 - 6.6 | Lichtstrahl |
| 7.1 - 7.6 | Lichtimpuls |
| 8.1 - 8.6 | Synchronisationssequenz |
| 9.1 - 9.6 | kodierte Lichtimpulsfolge |

**Patentansprüche**

1. Optoelektronische Sensoranordnung (10) mit mehreren in einem Lichtsendeelement (12) angeordneten Lichtsendern (2.1-2.6) und mit mehreren in einem Lichtempfangselement (14) angeordneten Lichtempfängern (4.1-4.6), wobei jeweils ein Lichtsender (2.1-2.6) und ein zugehöriger Lichtempfänger (4.1-4.6) ein Lichtsender-/Lichtempfängerpaar (1-6) bilden, und mit einer Lichtsendersteuerung sowie einer Lichtempfängersteuerung, wobei das Lichtsendeelement und das Lichtempfangselement elektrisch voneinander entkoppelt sind und wobei die Lichtsender (2.1-2.6) und die Lichtempfänger (4.1-4.6) zur Abgabe und zum hierzu synchronen Empfang von Lichtimpulsen (7.1-7.6) jeweils einzeln, zeitlich nacheinander und zyklisch aktivierbar sind, und wobei die Lichtsendersteuerung für jeden Zyklus zum Aussenden einer genauen Zahl von Lichtimpulsen (7.1-7.6) je Lichtsender (2.1-2.6) ausgebildet ist,
**dadurch gekennzeichnet, dass** die Lichtsendersteuerung ausgebildet ist, in wenigstens einem von mehreren Zyklen wenigstens einen Lichtsender (2.1-2.6) zum Aussenden wenigstens eines zusätzlichen Lichtimpulses zu aktivieren, wobei der zusätzliche Lichtimpuls in verschiedenen Zyklen von verschiedenen Lichtsendern (2.1-2.6) ausgesendet wird.

2. Optoelektronische Sensoranordnung nach Anspruch 1,
**dadurch gekennzeichnet, dass** in aufeinanderfolgenden Zyklen verschiedene Lichtsender (2.1-2.6) zum Aussenden des wenigstens einen zusätzlichen Lichtimpulses aktivierbar sind.

3. Optoelektronische Sensoranordnung nach einem der vorhergehenden Ansprüche,
**dadurch gekennzeichnet, dass** wenigstens ein zusätzlicher Lichtimpuls in der an einen Zyklus anschließenden Pause zwischen zwei Zyklen ausgesendet wird.

4. Optoelektronische Sensoranordnung nach einem der vorhergehenden Ansprüche,
**dadurch gekennzeichnet, dass** wenigstens ein zusätzlicher Lichtimpuls im Anschluss an die vorgegebene Zahl von Lichtimpulsen eines Lichtsenders (2.1-2.6) und/oder dieser vorausgehend von diesem Lichtsender (2.1-2.6) ausgesendet wird.

5. Optoelektronische Sensoranordnung nach Anspruch 1,
**dadurch gekennzeichnet, dass** der wenigstens eine zusätzliche Lichtimpuls ein Synchronisationssignal (8.1-8.6) ist.

6. Optoelektronische Sensoranordnung nach Anspruch 1,
**dadurch gekennzeichnet, dass** der wenigstens eine zusätzliche Lichtimpuls eine kodierte Lichtimpulsfolge (9.1-9.6) mit der Angabe der Nummer des jeweiligen Lichtsenders (2.1-2.6) ist.

7. Optoelektronische Sensoranordnung nach Anspruch 1,
**dadurch gekennzeichnet, dass** die Lichtsendersteuerung dazu ausgebildet ist, für jeden Zyklus genau einen Lichtimpuls (7.1-7.6) je Lichtsender (2.1-2.6) auszusenden.

8. Optoelektronische Sensoranordnung nach einem der vorhergehenden Ansprüche,
**dadurch gekennzeichnet, dass** die optoelektronische Sensoranordnung (10) als Sicherheitslichtgitter ausgebildet ist.

## Claims

**1.** An optoelectronic sensor arrangement (10) having a plurality of light transmitters (2.1-2.6) arranged in a light transmission element (12) and having a plurality of light receivers (4.1-4.6) arranged in a light reception element (14), wherein a respective light transmitter (2.1-2.6) and an associated light receiver (4.1-4.6) form a light transmitter/ light receiver pair (1-6), and having a light transmitter control and a light receiver control, wherein the light transmission element and the light reception element are electrically decoupled from one another, and wherein the light transmitters (2.1-2.6) and the light receivers (4.1-4.6) can each be activated after one another in time and cyclically to output light pulses (7.1-7.6) and to receive them synchronously thereto, and wherein the light transmitter control is configured for transmitting an exact number of light pulses (7.1-7.6) per light transmitter (2.1-2.6) for each cycle, **characterised in that** the light transmitter control is configured to activate at least one light transmitter (2.1-2.6) in at least one cycle to transmit at least one additional light pulse, wherein the additional light pulse is transmitted by different light transmitters (2.1-2.6) in different cycles.

**2.** An optoelectronic sensor arrangement in accordance with claim 1, **characterised in that** different light transmitters (2.1-2.6) can be actuated to transmit the at least one additional light pulse in consecutive cycles.

**3.** An optoelectronic sensor arrangement in accordance with one of the preceding claims, **characterised in that** at least one additional light pulse is transmitted in the pause between two cycles subsequent to a cycle.

**4.** An optoelectronic sensor arrangement in accordance with any one of the preceding claims, **characterised in that** at least one additional light pulse is transmitted subsequent to the predefined number of light pulses of a light transmitter (2.1-2.6) and/or is transmitted by this light transmitter (2.1-2.6) in advance thereof.

**5.** An optoelectronic sensor arrangement in accordance with claim 1, **characterised in that** the at least one additional light pulse is a synchronisation signal (8.1-8.6).

**6.** An optoelectronic sensor arrangement in accordance with claim 1, **characterised in that** the at least one additional light pulse is a coded light pulse sequence (9.1-9.6) with the indication of the number of the respective light transmitter (2.1-2.6).

**7.** An optoelectronic sensor arrangement in accordance with claim 1, **characterised in that** the light transmitter control is configured to transmit exactly one light pulse (7.1-7.6) per light transmitter (2.1-2.6) for each cycle.

**8.** An optoelectronic sensor arrangement in accordance with any one of the preceding claims, **characterised in that** the optoelectronic sensor arrangement (10) is configured as a safety light grating.

## Revendications

**1.** Agencement capteur optoélectronique (10) comprenant plusieurs émetteurs de lumière (2.1-2.6) agencés dans un élément émetteur de lumière (12), et comprenant plusieurs récepteurs de lumière (4.1-4.6) agencés dans un élément récepteur de lumière (14), dans lequel un émetteur de lumière respectif (2.1-2.6) et un récepteur de lumière associé (4.1-4.6) forment une paire émetteur/récepteur de lumière (1-6), et comprenant une commande d'émetteur de lumière ainsi qu'une commande de récepteur de lumière, dans lequel l'élément émetteur de lumière et l'élément récepteur de lumière sont découplés électriquement l'un de l'autre, et dans lequel les émetteurs de lumière (2.1-2.6) et les récepteurs de lumière (4.1-4.6) sont susceptibles d'être activés respectivement individuellement, temporellement les uns après les autres et de manière cyclique pour l'envoi et pour la réception synchrone à celle-ci d'impulsions de lumière (7.1-7.6), et dans lequel la commande d'émetteur de lumière est réalisée en vue de l'émission à chaque cycle d'un nombre exact d'impulsions de lumière (7.1-7.6) pour chaque émetteur de lumière (2.1-2.6), **caractérisé en ce que** la commande d'émetteur de lumière est réalisée pour activer dans au moins un parmi plusieurs cycles au moins un émetteur de lumière (2.1-2.6) pour émettre au moins une impulsion de lumière supplémentaire, et l'impulsion de lumière supplémentaire est émise dans différents cycles par des émetteurs de lumière différents (2.1-2.6).

2. Agencement capteur optoélectronique selon la revendication 1,
   **caractérisé en ce que** dans des cycles successifs des émetteurs de lumière (2.1-2.6) différents sont susceptibles d'être activés pour émettre ladite au moins une impulsion de lumière supplémentaire.

3. Agencement capteur optoélectronique selon l'une des revendications précédentes,
   **caractérisé en ce que** ladite au moins une impulsion de lumière supplémentaire est émise entre deux cycles dans la pause qui fait suite à un cycle.

4. Agencement capteur optoélectronique selon l'une des revendications précédentes,
   **caractérisé en ce qu'**au moins une impulsion de lumière supplémentaire est émise à la fin du nombre prédéterminé d'impulsions de lumière d'un émetteur de lumière (2.1-2.6) et/ou de manière à précéder ce nombre, par cet émetteur de lumière (2.1-2.6).

5. Agencement capteur optoélectronique selon la revendication 1,
   **caractérisé en ce que** ladite au moins une impulsion de lumière supplémentaire est un signal de synchronisation (8.1-8.6).

6. Agencement capteur optoélectronique selon la revendication 1,
   **caractérisé en ce que** ladite au moins une impulsion de lumière supplémentaire est une succession d'impulsions de lumière codée (9.1-9.6) avec indication du numéro de l'émetteur de lumière respectif (2.1-2.6).

7. Agencement capteur optoélectronique selon la revendication 1,
   **caractérisé en ce que** la commande d'émetteur de lumière est réalisée pour émettre à chaque cycle exactement une impulsion de lumière (7.1-7.6) pour chaque émetteur de lumière (2.1-2.6).

8. Agencement capteur optoélectronique selon l'une des revendications précédentes,
   **caractérisé en ce que** l'agencement capteur optoélectronique (10) est réalisé sous forme de grille lumineuse de sécurité.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10033077 A1
- DE 102005045578 A1